Europäisches Patentamt

European Patent Office

Office européen des brevets

(11) Publication number: **0 350 215**

**A2**

## (12) EUROPEAN PATENT APPLICATION

(21) Application number: **89306661.3**

(22) Date of filing: **30.06.89**

(30) Priority: **02.07.88 GB 8815796**

(43) Date of publication of application:
**10.01.90 Bulletin 90/02**

(84) Designated Contracting States:
**BE DE ES FR GB IT NL SE**

(51) Int. Cl.⁴: **F04B 49/00**

(71) Applicant: **BENDIX LIMITED**
**Douglas Road**
**Kingswood, Bristol BS15 2NL(GB)**

(72) Inventor: **Selway, Martin**
**34 Hawthorn Grove Combe Down**
**Bath BA2 5QA Avon(GB)**

(74) Representative: **Turner, Alan Reginald**
**BENDIX LIMITED Douglas Road**
**Kingswood, Bristol BS15 2NL(GB)**

(54) **Gas compressing system.**

㊼ In an air compressor system a piston and cylinder compressor (1) is provided with means for unloading by connection of additional clearance volume the compressor output (2) line connected via an air dryer (4, 5, 6, 7) to a storage reservoir (3) the air dryer being provided with a purge valve (9) controlled by a governor and a pressure retaining valve (8) being incorporated in the air dryer body which operates to monitor pressure in the compressor output line (2) whilst the interior of the air dryer is being purged via the purge valve (9).

EP 0 350 215 A2

# GAS COMPRESSING SYSTEM

The present invention relates to a gas compressing system and relates especially to a system in which the supply of compressed gas to a reservoir by a compressor can be interrupted on attainment of a pre-determined pressure with means which holds open the compressor inlet valve or valves or which opens a valve which connects additional clearance volume to the compressor.

As an alternative to means for holding open a compressor line unloader valve it has been proposed to provide a compressor for charging a compressed air system or reservoir with compressed air, the compressor having a means operation of which on attainment of a pre-determined pressure eather holds open a compressor inlet valve or connects the compression chamber of the compressor to an additional volume. In the former case the compression chamber falls to the input pressure thereof and the compressor ceases to operate. In the latter case the resulting enhancement of the clearance volume of the compressor has an effect of interrupting the supply of compressed air since the pressure downstream of the pressure delivery valve of the compressor remains higher than the pressure now available in the enhanced clearance volume. One such compressor has been described in published U.K. Specification serial No. 2192945. The effect of using a valve which connects such an additional volume to the compression chamber, instead of using a more conventional unloader valve which vents the compressor output, is that a substantial part of the energy employed in driving air into the enhanced clearance volume during a compression stroke of the piston of the unloaded compressor is returned to the piston during the returning stroke. Moreover, by virtue of the fact that the compression chamber is not vented during the return stroke of the piston there are longer periods of super-atmospheric pressure therein during operation and there is a reduced tendency for lubricating oil to be drawn into the system from the compressor crankcase between the piston and cylinder wall.

In compressed air systems, for compressed air braking of vehicles, it is common practice to include an air dryer in the delivery line between the compressor and the reservoir or reservoirs it supplies. An air dryer is a highly desirable feature of a modern compressed air braking system because it protects the system against undesirable contaminants such as oil or water which may adversely affect the operation of sensitive valve devices.

An air dryer in a compressed air braking system is normally of a type which contains desiccant material capable of being regenerated from time to time by purging with a metered reverse flow of dry air which is discharged to atmosphere through a purge valve. The purge valve is typically and conveniently operated each time the operation of the compressor is interrupted. If the operation of the compressor is interrupted by means of a valve which is required to enhance clearance volume, as distinct from venting the compressor output, the presence of an air dryer can have a shortcoming in that the clearance volume itself tends to be vented during purging of the air dryer.

A similar shortcoming may be experienced in some instances when using, instead of an air dryer, a condenser provided with a drain valve which is operable from time to time to despatch condensed moisture.

Such shortcomings as envisaged above may be added to in the case of an air dryer which is used in conjunction with a compressor which is supplied with input air via a turbo charger. In that case not only may the turbo charger pressure be reduced, accompanied by a drop in engine performance, but also off-load energy comsumption of the compressor will be higher.

According to the present invention there is provided a gas compressor system including a compressor a compressed gas storage reservoir connected via a gas drier or condenser to receive pressurised gas from the compressor, means operable upon attainment of a predetermined pressure in or upstream of said reservoir to hold open an inlet valve of the compressor or to connect additional clearance volume to interrupt the operation thereof, characterised in that the housing of the gas drier or condenser includes in the path from its input port a pressure retaining valve having a valve member presenting to gas pressure at the input port an area which acts in a sense to unseat the valve member from its seat and means acting on the valve member to urge it against its seat when gas pressure downstream thereof is vented by the purge valve thereby main taining gas pressure at said input port.

In order that the invention may be more clearly understood and readily carried into effect, the same will be further described by way of example with reference to the accompanying drawings of which:

Fig. 1 illustrates in diagrammatical form a compressed gas system incorporating the invention, and

Fig. 2 illustrates a part-sectional view of an example of one embodiment of an air dryer employed in the apparatus of Fig. 1.

Fig. 3 illustrates a part-sectional view of an alternative embodiment of an air dryer employed in the apparatus of Fig. 1.

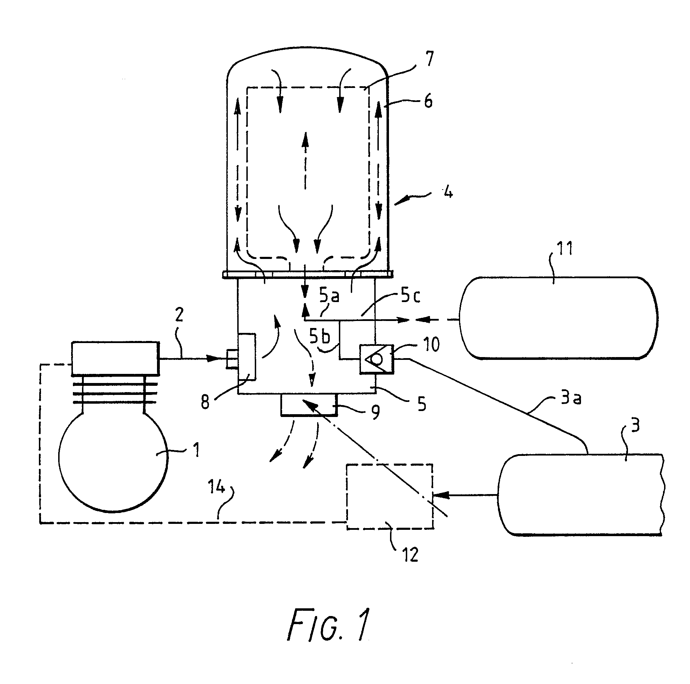

Referring to the apparatus of Fig. 1, a compressor denoted by reference 1 intended to be driven by the engine of a vehicle provides a source of compressed air in output connection 2, for charging reservoirs such as 3, via a compressed air pipe 3a of the system. The compressor is a piston and cylinder compressor of substantially conventional type but it includes in its cylinder head a small additional clearance volume and an extra valve which in response to a signal from a governor is operable to connect the extra clearance volume to unload the compressor. Such a compressor is described in more detail in the Specification of U.K. Patent Serial No. 2192945. The pipe 2 is connected to a reservoir 3 via an air dryer denoted generally by reference 4 via a pipe 3a. The air dryer comprises a main body casting 5 and a replaceable cartridge 6 containing desiccant through which air under pressure is driven by the compressor 1. The body casting is provided with three valves denoted by references 8, 9 and 10. The valve 9 is a normall closed purge valve the valve 8 is a pressure retaining valve which is normally opened in operation to permit compressed air to be applied to the interior of the body 5 and the valve 10 is an output check valve. The flow of compressed air is via paths denoted generally by the solid arrows shown in the drawing, from which it is seen that incoming air from line 2 enters the body part 5 and passes upwards around the interior surface of the cartridge 6, then downwards through the desiccant 7 and then via passages 5a and 5b (provided in the casting 5) and the output check valve 10 to the pipe 3a. A so-called purge volume denoted by reference 11 is connected via passage 5c upstream of the output check valve 10 so that it is chargeable to approximately the same pressure as the system reservoir connected to pipe 3a. The apparatus further includes a governor denoted by a broken outline 12 which is coupled on the one hand to an unloader valve in the cylinder head of the compressor and on the other hand to means for actuating the valve 9 to the alternative condition wherein valve 9 is opened at the same time as the unloader valve is operated.

In operation the governor 12 is responsive to attainment of a predetermined compressed air system pressure and applies a pressure signal via a connection 14 to the compressor to cause the unloader valve (not shown) in the cylinder head to open for the connecting to the compression chamber of the small volume additional to the clearance volume thereby interrupting the supply of compressed air via pipe 2. Such unloader valve is described in the above mentioned U.K. Patent Specification. The simultaneous opening of valve 9 permits purge air initially at system pressure in the air dryer body to pass out via the valve followed by metered outflow of air which is also held in the purge volume 11. The direction of flow of this purge air is indicated by the broken line arrows from which it is seen that this results in a purging of the desiccant 7 by dry air from the purge volume 11 flowing in a direction which is reverse to normal flow direction.

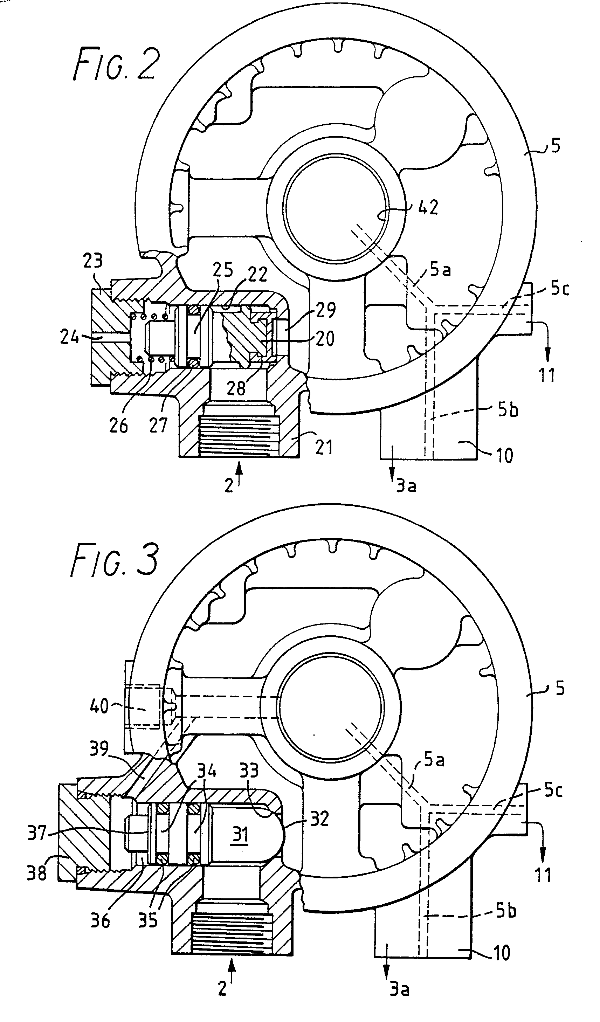

The pressure retaining valve 8 is a valve which is normally held closed by a spring force but is opened by applied pressure from the compressor and is held open when there is sufficient build-up of pressure in the air dryer casting 5 for a piston to overcome the spring force. A typical construction of the retaining valve 8 incorporated in the air dryer body is shown in Fig. 2 referred to below. The pressure in the pipe 2 and the enhanced clearance volume of the compressor is prevented by the protection valve 8 from being depleted into the vented air dryer below the pressure at which the protection valve close under the influence of the spring. The compressor is thereby able to continue to operate against the pressure in the thus isolated additional clearance volume during the "unloaded" condition. Upon sensing by the governor 12 of a lower predetermined system pressure, the unloader valve resets to its normal running condition. The compressor then resumes normal operation and the pressure in the air dryer casting 5 quickly regains a pressure at which the protection valve 8 re-opens.

Referring to Fig. 2 a part-sectional diagramatic view is given of one form of pressure-retaining valve as incorporated into the main body 5 of the air dryer. The connection from the pipe 2 is made via a pipe union to an input boss 21. At right angles and connected to this, a bore 22 has an aperture at its outer end closed by a screw threaded plug 23 with vent passage 24, between which and a sealingly slideable valve member 20 there is a captive spring 26 which urges member 25 towards a closing position as shown against a seat 28 peripheral to an air passage 29. The member 25 is also provided with an o-ring which provides the sealing in bore 22 and a suitable end piece which provides closure of passage 26. The diameter of the seat peripheral to passage 26 is appreciably smaller than the diameter of the bore 22 so that even in the closed position of the valve member as shown, air pressure at 2 produces a net force acting in a sense to oppose the force of spring 26 so that the valve is able to pass air from 2 to the interior of the air dryer. Moreover when the pressure in the casting 5 has reached a sufficient value the total pressure acting on the full area of member 25 maintains the valve continuously unseated for normal charging. However, when the compressor 1 is unloaded and the air drier interior is purged by purge valve 9 of Fig. 1 located in central aperture 42 of the casting 5, the valve member 20 reseats and closes off aperture 26. This ensures that the mentioned additional volume and the compression chamber of the compressor are maintained at a predetermined pressure which is appreciably higher than atmospheric and the advantages of this type of compressor unloading are maintained.

Referring to Fig. 3, an alternative form of the pressure retain ing valve 8, incorporated into the main casting 5 of the air dryer, comprises a valve member 31 having a hemispherical end surface 32 making metal-to-metal contact with a valve seat 33. The member 31 has annular circumferential grooves 34 carrying o-rings 35 sealingly slideable in a bore 36. A pressurable region 37 enclosed between a plug 38 and member 31 is connected via a passage 39 to a purge valve control pressure passage 40, which receives purge signals from governor 12 (Fig. 1). Passage 40 communicates with a purge valve control assembly (not shown), located in the control aperture 42 of the casting.

In normal operation the compressor pressure at 2 acts on 31 in a sense to unseat it from seat 33, it being noted that the seated area of 32 is less than the area presented to the air pressure by the o-rings 35 in the bore 36. As the pressure in 5 increases, the member 31 moves fully to the left to provide an unobstructed way through the valve seat 33. When the pressure in the reservoir attains the predetermined pressure setting of the governor however a signal pressure is applied to port 40 to purge the air dryer whilst the compressor is off load. The pressure in 5 then descends and the signal pressure acting via a passage 39 on the lefthand side area 37 of the member 31 becomes predominant over the respective areas of 31 so that 31 moves rightwards rapidly to its seated position thereby inhibiting further appreciable collapse of pressure in line 2. Accordingly, the pressure in the mentioned enhanced clearance volume of the compressor is maintained as before.

Whilst in the system described in the foregoing with reference to Fig. 1 includes a compressor which is unloaded by means connects an additional clearance volume to the compression chamber, the compressor may include means whereby in response to a signal on line 14, the compressor inlet valve is held open. In such a case and particularly where the compressor is supplied with air from a turbo charger it is again advantageous that purging of the air dryer does not cause the turbo charged input pressure to the compressor to be depressed and this is again ensured by virtue of the invention.

## Claims

1. A gas compressor system including a compressor (1) a compressed gas storage reservoir (3) connected via a gas drier or condenser (4, 5) to receive pressurised gas from the compressor (1), means (12) operable upon attainment of a predetermined pressure in or upstream of said reservoir to hold open an inlet valve of the compressor or to connect additional clearance volume to interrupt the operation thereof, characterised in that the housing (5) of the gas drier or condenser includes in the path from its input port (2) a pressure retaining valve having a valve member (20; 31) presenting to gas pressure at the input port an area which acts in a sense to unseat the valve member from its seat (28; 33) and means acting on the valve member to urge it against its seat (28; 33) when gas pressure downstream thereof is vented by the purge valve thereby maintaining gas pressure at said input port.

2. A gas compressor system as claimed in claim 1 characterised in that said means (12) acting on the valve member (20; 31) to urge it against its seat (28; 33) comprises a spring (26).

3. A gas compressing system as claimed in claim 1 characterised in that said means (12) acting on the valve member to urge it against its seat comprises a pressure responsive area (37) of said member and means (39) connecting said area (37) to a source (12) of signal pressure for the purge valve.

4. A gas compressor system as claimed in claims 2 or 3 characterised in that the pressure protection valve comprises a one-piece sealingly slideable member an end of which is moveable towards and away from sealing abutment with a seat (28; 31).

5. A gas compressor system as claimed in claim 4 characterised in that said valve member has an end surface (32) making metal-to-metal contact with its seating surface (31).

6. A gas compressor system as claimed in claim 5 characterised in that said end surface is part spherical where it engages its seating surface.

FIG. 1

*FIG. 2*

*FIG. 3*